# EUROPEAN PATENT APPLICATION

(11) **EP 1 505 515 A2**
(43) Date of publication of application: **09.02.2005**
(21) Application number: 04000037.4
(22) Date of filing: 03.01.2004
(51) Int. Cl.: G06F 17/24

(54) **Automatic file generation**

(30) Priority: 08.07.2003 JP 2003271668
(71) Applicant: Kazutomo Co., Ltd., Tokyo 110-0016 (JP)
(72) Inventor: Kobayashi, Yoshihide, Tokyo 110-0016 (JP)
(74) Representative: Brötz, Helmut, Dr.

(57) **Abstract**

An automatic file generating apparatus, method, program and record medium that can handle requirements for output data by simple additions and alterations without restriction on the format of the input data file. A central controller 100 is connected via an input-output controller 110 to an auxiliary storage unit 120, an input unit 130, a display unit 140, and a printer 150. The auxiliary storage unit 120 stores a generator program file 121, a parameter file 5, a data file 6, a template file 7, and an output file 8. The central controller 100 loads a copy of the generator program file 121 stored in the auxiliary storage unit 120 into a main storage unit, and has a CPU 101 execute the program.

## Description

### BACKGROUND OF THE INVENTION

### Field of the Invention

The present invention relates to an apparatus, method, program and record medium for automatically generating a necessary file by using a data file and a template file in a computer system.

### Description of the Related Art

In a conventional apparatus and method for a computer system that processes a data file input thereto by a generator and automatically generates a necessary output file, it is usual that the data file contains data in a specific, exclusive format, which has been generated by a specific application software, and that a generator (file generator) reads in this data and generates a necessary output file by using a template file in a specific, exclusive format which has been generated by a specific application software likewise. Hence, multiple kinds of formats cannot be used for the input and template files. Furthermore, a dedicated program needs to be created in order to handle a data format that a general generator cannot process.

Moreover, patterns of output files that users require vary widely. With the conventional automatic file generating apparatus and method, great modification may need to be made to software in order to generate output files satisfying specifications required by users.

The above is disclosed in Japanese Patent Laid-Open Publication No. 5-108325, Japanese Patent Laid-Open Publication No. 9-101885, Japanese Patent Laid-Open Publication No. 2001-229055, Japanese Patent Publication No. 2720643, and Japanese Patent Publication No. 2671793.

As described above, the conventional apparatus and method that processes a data file and a template file by the generator and that automatically generates an output file usually handles exclusively data files and template files generated by a specific application software. Hence, there is the problem that an apparatus, method, program, and record medium that can handle a plurality of kinds of data formats when processing data does not exist.

Furthermore, in order to handle a data format that the specific generator cannot deal with, a different, dedicated program needs to be created, thus causing the problem of needing a lot of time and cost.

Moreover, patterns of output files that users require vary widely. With the conventional automatic file generating apparatus and method, great modification may need to be made to software in order to generate output files achieving specifications required by users, thus causing the problem of needing a lot of time and cost.

### SUMMARY OF THE INVENTION

An object of the present invention is to provide an automatic file generating apparatus, method, program and record medium that can handle requirements for an output file by simple additions and alterations without restriction on the format of the data file, thus enabling the reduction of time and cost and solving the above problems.

In order to achieve the above object, the present invention provides the following configurations according to the claims.
(1) According to claim 1, there is provided an automatic file generating apparatus which analyzes a data file and a template file as analysis targets and generates an output file by applying the data file to the template file, comprising:
   a data file analysis portion; a template file analysis portion; and an output file generating portion,
   wherein the data file analysis portion comprises:
   means that reads in the data file line by line; means that determines whether the read-in line contains a definition item or a definition datum; and means that stores a determined definition item and a corresponding definition datum in such a way that they are related to each other,
   wherein the template file analysis portion comprises:
   means that reads in the template file line by line; and
   means that determines whether the read-in line is an output statement, and when being an output statement, determines whether the output statement contains a character-string to be replaced, and when a to-be-replaced character-string is not contained, stores the output statement as it is, or when a to-be-replaced character-string is contained, stores the output statement after replacing the to-be-replaced character-string with one of the definition data corresponding to the definition item by referencing one of the definition items that coincides with the to-be-replaced character-string, and
   wherein the output file generating portion comprises:
   means that generates an output file from the output statements stored by the template file analysis portion.
(2) According to claim 2, there is provided the automatic file generating apparatus according to claim 1,
   wherein the template file analysis portion further comprises: means that determines whether the read-in line is a control statement, and when being a control statement, executes processing designated by the control statement.
(3) According to claim 3, there is provided the automatic file generating apparatus according to claim 2,
   wherein the template file analysis portion further comprises: means that determines whether the read-in line is a comment statement, and when being a comment statement, makes processing proceed to reading in a next line of the template file.
(4) According to claim 4, there is provided the automatic file generating apparatus according to claim 3, further comprising: an operation information read-in portion that reads in beforehand, storage location information about a location where the data file and the template file as analysis targets are stored; identification information for discriminating between the output statements, the control statements, and the comment statements; and operation information including at least name information for the control statements.
(5) According to claim 5, there is provided the automatic file generating apparatus according to claim 4, further comprising: means that builds a data file list made up of a plurality of data file names and a template file list made up of a plurality of template file names based on the storage location information; means that selects the file names of a data file and a template file as analysis targets from the data file list and the template file list respectively.
(6) According to claim 6, there is provided the automatic file generating apparatus according to any of claims 1 through 5, further comprising: means that stores a user defined item and a corresponding user defined value, which are not contained in the data file, beforehand in such a way that they are related to each other,
   wherein the template file analysis portion further comprises: means that determines whether the output statement contains a user defined item character-string, and when a user defined item character-string is contained, stores the output statement after replacing the user defined item character-string with one of the user defined values corresponding to the user defined item by referencing one of the user defined items that coincides with the user defined item character-string.
(7) According to claim 7, there is provided an automatic file generating method with which a computer analyzes a data file and a template file and generates an output file by applying the data file to the template file, comprising:
   a data file analysis step; a template file analysis step; and an output file generating step,
   wherein the data file analysis step comprises: a process that reads in the data file line by line; a process that determines whether the read-in line contains a definition item or a definition datum; and a process that stores a determined definition item and a corresponding definition datum in such a way that they are related to each other,
   wherein the template file analysis step comprises: a process that reads in the template file line by line; and a process that determines whether the read-in line is an output statement, and when being an output statement, determines whether the output statement contains a character-string to be replaced, and when a to-be-replaced character-string is not contained, stores the output statement as it is, or when a to-be-replaced character-string is contained, stores the output statement after replacing the to-be-replaced character-string with one of the definition data corresponding to the definition item by referencing one of the definition items that coincides with the to-be-replaced character-string, and
   wherein the output file generating step comprises: a process that generates an output file from the output statements stored by the template file analysis portion.
(8) According to claim 8, there is provided the automatic file generating method according to claim 7,
   wherein the template file analysis step further comprises:
   a process that determines whether the read-in line is a control statement, and when being a control statement, executes processing designated by the control statement.
(9) According to claim 9, there is provided the automatic file generating method according to claim 8,
   wherein the template file analysis step further comprises:
   a process that determines whether the read-in line is a comment statement, and when being a comment statement, makes processing proceed to reading in a next line of the template file.
(10) According to claim 10, there is provided the automatic file generating method according to claim 9, further comprising: an operation information read-in step that reads in beforehand, storage location information about a location where the data file and the template file as analysis targets are stored; identification information for discriminating between the output statements, the control statements, and the comment statements; and operation information including at least name information for the control statements.
(11) According to claim 11, there is provided the automatic file generating method according to claim 10, further comprising: a process that builds a data file list made up of a plurality of data file names and a template file list made up of a plurality of template file names based on the storage location information; a process that selects the file names of a data file and a template file as analysis targets from the data file list and the template file list respectively.
(12) According to claim 12, there is provided the automatic file generating method according to any of claims 7 through 11, further comprising: a process that stores a user defined item and a corresponding user defined value, which are not contained in the data file, beforehand in such a way that they are related to each other,
   wherein the template file analysis step further comprises: a process that determines whether the output statement contains a user defined item character-string, and when a user defined item character-string is contained, stores the output statement after replacing the user defined item character-string with one of the user defined values corresponding to the user defined item by referencing one of the user defined items that coincides with the user defined item character-string.
(13) According to claim 13, there is provided an automatic file generating program which implements a function of analyzing a data file and a template file and generating an output file by applying the data file to the template file by a computer, the program further implementing:
   a data file analysis function; a template file analysis function; and an output file generating function,
   wherein the data file analysis function includes: a function of reading in the data file line by line; a function of determining whether the read-in line contains a definition item or a definition datum; and a function of storing a determined definition item and a corresponding definition datum in such a way that they are related to each other,
   wherein the template file analysis function includes:
   a function of reading in the template file line by line; and a function of determining whether the read-in line is an output statement, and when being an output statement, determining whether the output statement contains a
   character-string to be replaced, and when a to-be-replaced character-string is not contained, storing the output statement as it is, or when a to-be-replaced character-string is contained, storing the output statement after replacing the to-be-replaced character-string with one of the definition data corresponding to the definition item by referencing one of the definition items that coincides with the to-be-replaced character-string, and
   wherein the output file generating function includes:
   a function of generating an output file from the output statements stored by the template file analysis portion.
(14) According to claim 14, there is provided the automatic file generating program according to claim 13,
   wherein the template file analysis function further includes: a function of determining whether the read-in line is a control statement, and when being a control statement, executing processing designated by the control statement.
(15) According to claim 15, there is provided the automatic file generating program according to claim 14,
   wherein the template file analysis function further includes: a function of determining whether the read-in line is a comment statement, and when being a comment statement, making processing proceed to reading in a next line of the template file.
(16) According to claim 16, there is provided the automatic file generating program according to claim 15, further implementing: an operation information read-in function of reading in beforehand, storage location information about a location where the data file and the template file as analysis targets are stored; identification information for discriminating between the output statements, the control statements, and the comment statements; and operation information including at least name information for the control statements.
(17) According to claim 17, there is provided the automatic file generating program according to claim 16, further implementing: a function of building a data file list made up of a plurality of data file names and a template file list made up of a plurality of template file names based on the storage location information; a function of selecting the file names of a data file and a template file as analysis targets from the data file list and the template file list respectively.
(18) According to claim 18, there is provided the automatic file generating program according to any of claims 13 through 17, further implementing: a function of storing a user defined item and a corresponding user defined value, which are not contained in the data file, beforehand in such a way that they are related to each other,
   wherein the template file analysis function further includes: a function of determining whether the output statement contains a user defined item character-string, and when a user defined item character-string is contained, storing the output statement after replacing the user defined item character-string with one of the user defined values corresponding to the user defined item by referencing one of the user defined items that coincides with the user defined item character-string.
(19) According to claim 19, there is provided a record medium which is computer-readable and on which an automatic file generating program that implements a function of analyzing a data file and a template file and generating an output file by applying the data file to the template file by a computer is recorded, the medium via the program further implementing:
   a data file analysis function; a template file analysis function; and an output file generating function,
   wherein the data file analysis function includes: a function of reading in the data file line by line; a function of determining whether the read-in line contains a definition item or a definition datum; and a function of storing a determined definition item and a corresponding definition datum in such a way that they are related to each other,
   wherein the template file analysis function includes:
   a function of reading in the template file line by line; and a function of determining whether the read-in line is an output statement, and when being an output statement, determining whether the output statement contains a
   character-string to be replaced, and when a to-be-replaced character-string is not contained, storing the output statement as it is, or when a to-be-replaced character-string is contained, storing the output statement after replacing the to-be-replaced character-string with one of the definition data corresponding to the definition item by referencing one of the definition items that coincides with the to-be-replaced character-string, and
   wherein the output file generating function includes:
   a function of generating an output file from the output statements stored by the template file analysis portion.
(20) According to claim 20, there is provided the record medium on which the automatic file generating program is recorded according to claim 19, wherein the template file analysis function further includes: a function of determining whether the read-in line is a control statement, and when being a control statement, executing processing designated by the control statement.
(21) According to claim 21, there is provided the record medium on which the automatic file generating program is recorded according to claim 20, wherein the template file analysis function further includes: a function of determining whether the read-in line is a comment statement, and when being a comment statement, making processing proceed to reading in a next line of the template file.
(22) According to claim 22, there is provided the record medium on which the automatic file generating program is recorded according to claim 21, via the program further implementing: an operation information read-in function of reading in beforehand, storage location information about a location where the data file and the template file as analysis targets are stored; identification information for discriminating between the output statements, the control statements, and the comment statements; and operation information including at least name information for the control statements.
(23) According to claim 23, there is provided the record medium on which the automatic file generating program is recorded according to claim 22, via the program further implementing: a function of building a data file list made up of a plurality of data file names and a template file list made up of a plurality of template file names based on the storage location information; a function of selecting the file names of a data file and a template file as analysis targets from the data file list and the template file list respectively.
(24) According to claim 24, there is provided the record medium on which the automatic file generating program is recorded according to any of claims 19 through 23, via the program further implementing: a function of storing a user defined item and a corresponding user defined value, which are not contained in the data file, beforehand in such a way that they are related to each other,
wherein the template file analysis function further includes: a function of determining whether the output statement contains a user defined item character-string, and when a user defined item character-string is contained, storing the output statement after replacing the user defined item character-string with one of the user defined values corresponding to the user defined item by referencing one of the user defined items that coincides with the user defined item character-string.

### BRIEF DESCRIPTION OF THE DRAWINGS

FIG. 1 is a schematic view showing the configuration of an embodiment of the automatic file generating apparatus;
FIG. 2 is a block diagram showing the internal structure of a generator program file and a relationship with related files;
FIG. 3 is a flow chart showing the processing by a generator portion;
FIG. 4 is a block diagram showing relationships between data associated with the processing by the generator portion;
FIG. 5 is a view showing an example of a file name select screen when the generator program file is executed; and
FIG. 6 is a view showing specifically the processing when the generator program file is executed, with centering on the contents of the files.

### DETAILED DESCRIPTION OF THE PREFERRED EMBODIMENT

An embodiment of the present invention will be described below with reference to the drawings.

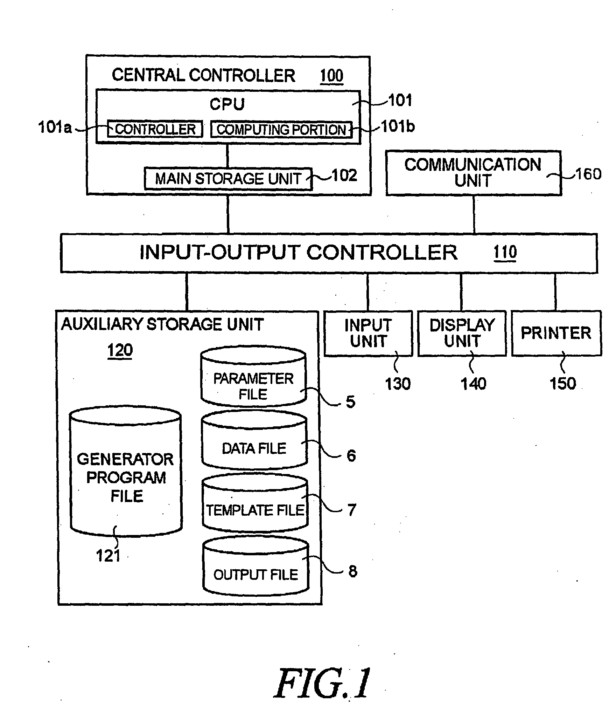

FIG. 1 is a schematic view of the configuration of an embodiment of the automatic file generating apparatus of the present invention.

The automatic file generating apparatus, as a computer, has a central controller 100 that comprises a CPU 101, consisting of a controller 101a and a computing portion 101b, and a main storage unit 102. The central controller 100 is connected via an input-output controller 110 to an auxiliary storage unit 120 which stores various related files, an input unit 130 such as a key board or a mouse for inputting instructions and the like necessary to operate, a display unit 140 such as a monitor screen for displaying input contents and execution results, a printer 150 used to print out execution results and the like, and a communication unit 160 used to send files via a network to another terminal and by electronic mail or facsimile.

The auxiliary storage unit 120 stores a generator program file 121, a parameter file 5, a data file 6, a template file 7, and an output file 8.

The central controller 100 loads a copy of the generator program file 121 stored in the auxiliary storage unit 120 into the main storage unit, and has the CPU 101 execute the program. By this means, the computer functions as an automatic file generating apparatus, and executes an automatic file generating method. According to the automatic file generating method being executed, the CPU 101 controls the auxiliary storage unit 120, the input unit 130, the display unit 140, the printer 150, and the communication unit 160.

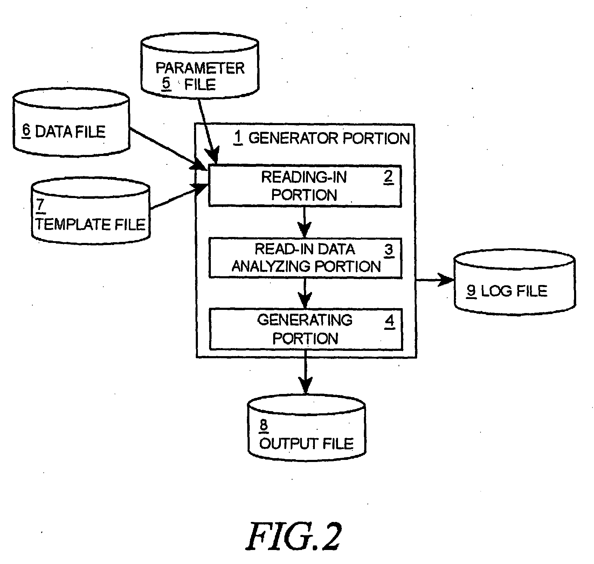

FIG. 2 is a block diagram showing the internal structure of the generator program file 121 of the automatic file generating apparatus of the present invention, and a relationship with related files. A generator portion 1 representing the main part of the generator program file 121 consists essentially of a reading-in portion 2 that reads in data and a read-in data analyzing portion 3 that analyzes read-in data, and a generating portion 4 that generates an output file from the analyzed data.

Furthermore, the parameter file 5, the data file 6, the template file 7, the output file 8 to store output results of the generator portion 1 performing processing, and a log file 9 for recording a log of the process of processing by the generator portion 1, and error messages are provided as files necessary for the generator portion 1 to perform processing.

The generator portion 1 reads in the parameter file 5 where information necessary for the processing is set, the data file 6 which stores data to be actually processed, and the template file 7 where information about the form in which to be output to the output file 8 is set and stored. The generator portion 1 performs processing according to the contents of the above files to output the results to the output file 8 for storing. Data in the data file 6 is used as data to replace according to the written contents of the template file 7.

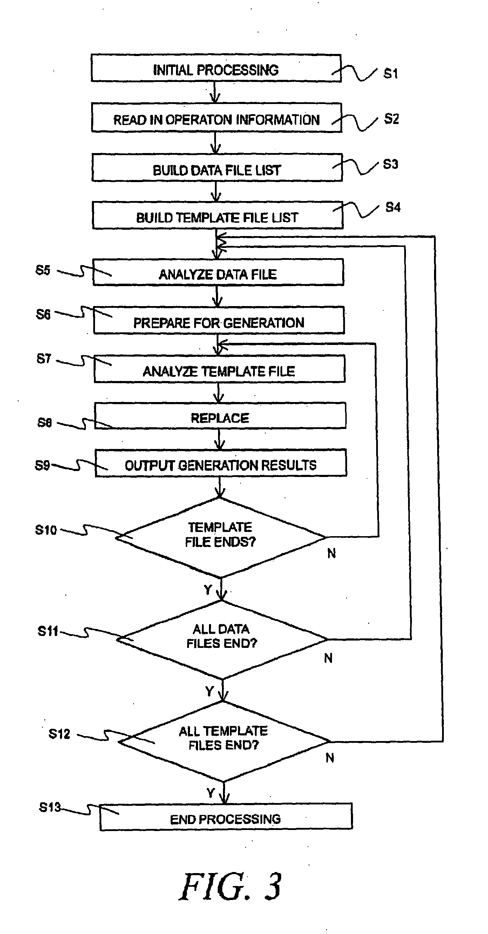

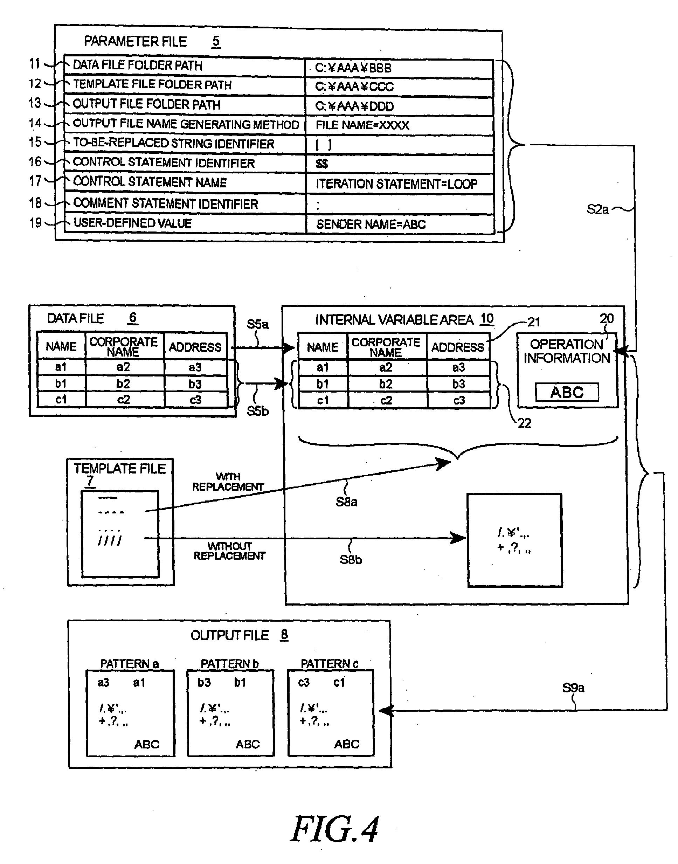

FIG. 3 is a flow chart showing the processing by the generator portion 1, and FIG. 4 is a block diagram showing relationships between data associated with the processing by the generator portion 1. The processing by the generator portion 1 will be described with reference to FIGS. 3 and 4.

First, in an initial processing step S1, the log file 9 for storing a log of the process of the processing and error messages is opened.

Next, in an operation information read-in step S2, information is read in from the parameter file 5 created beforehand. The parameter file 5 stores, as shown in FIG. 4, folder path information such as a data file folder path 11 indicating the location of the data file 6 (for example, C¥AAA¥BBB), a template file folder path 12 indicating the location of the template file 7 (for example, C¥AAA¥CCC), and an output file folder path 13 indicating the folder to store the output file 8 (for example, C¥AAA¥DDD), and also a method of generating the name of the output file 8, that is, an output file name generating method 14 representing how to name an output file (for example, file name = XXXX).

Also the parameter file 5 stores information such as a to-be-replaced string identifier 15 designating an identifier (e.g., []) for to-be-replaced character-strings written in the template file 7, a control statement identifier 16 designating an identifier (e.g., $$) for control statements written in the template file 7, a control statement name 17 specifying the name of a control statement (e.g., iteration statement = LOOP) written in the template file 7, and a comment statement identifier 18 designating an identifier (e.g., ;) for comment statements written in the template file 7.

The parameter file 5 also stores a user-defined value 19, which specifies a to-be-replaced character-string contained in the template file 7 and a character-string to replace it, for when the to-replace character-string is not contained in the data file 6 (for example, sender name = ABC).

In the operation information read-in step S2, at the same time when this information of the parameter file 5 is read in, the generator portion 1 creates fixed values such as execution date, time, and the like as common replacement information. And in sub-step S2a of FIG. 4, the contents of the parameter file 5 read in is stored as operation information 20 in an internal variable area 10 secured beforehand.

Next, in a data file list building step S3, the name of the data file present in the folder indicated by the data file folder path 11 (C¥AAA¥BBB) acquired in the operation information read-in step S2 is acquired, and data to replace in a replacement step S8, described later, is stored in the data file 6. Furthermore, without restriction on the data format of the data file 6, the data file 6 of any data format can be processed and output to the output file 8 in cooperation with the description in the template file 7.

In a template file list building step S4, the name of the template file present in the folder indicated by the template file folder path 12 (C¥AAA¥CCC) acquired in the operation information read-in step S2 is acquired.

The description in the template file 7 is made up of "output statements", "control statements", "comment statements". An "output statement" is for describing and specifying a content to be finally output to the output file 8, and a "control statement" is an already-defined command provided to execute control. These "control statements" include an "iteration statement" instructing to iterate between designated lines, a "conditional jump statement" specifying a condition to be evaluated and a destination to jump to if true, an "arithmetic statement" designating an arithmetic process, an "insertion statement" instructing to take in from the template file 7, a "conversion statement" converting data of a designated item in the data file 6 according to a designated conversion method prepared beforehand in the generator program file 121, and the like. Furthermore, a "comment statement" is a remark, which is not executed.

A user can describe contents necessary to be output to the output file 8 as output statements in the template file 7, and designate the execution of a replacement step S8, later described, for replacing character-strings in cooperation with data in the data file 6. These are important factors that enable outputting data of any input data format to the output file 8 easily.

In a data file analysis step S5, the data file 6 is read in from the folder indicated by the data file folder path 11 (C¥AAA¥BBB) acquired in the data file list building step S3, and in sub-step S5a, the first line in the data file 6 is stored in the internal variable area 10 as definition items 21 constituted by the item names of character-strings to be replaced in the replacement step S8 described later. Furthermore, in sub-step S5b, the second and later lines of the data file 6 are stored in the internal variable area 10 as definition data 22 made up of the character-strings to replace in the replacement step S8 described later.

In a generation preparing step S6, an output file name is generated according to the output file name generating method 14 acquired in the operation information read-in step S2. Here, the file name of the output file 8 is set to be, for example, "XXXX".

In a template file analysis step S7, the contents of the template file 7 present in the folder indicated by the template file folder path 12 (C¥AAA¥CCC) acquired in the template file list building step S4 are read in line by line, and it is determined whether the content described in each line is an "output statement", a "control statement", or a "comment statement".

When the above determining result indicates that the line is an "output statement", the replacement step S8 is taken. When indicating that the line is a "control statement", the corresponding control is performed, and then, processing returns to the template file analysis step S7. When indicating that the line is a "comment statement", the line is only read and not executed, and the next line is read, and then, processing returns to the template file analysis step S7.

The process of the replacement step S8 is a process executed when the above determining result indicates being an "output statement", and finds whether the to-be-replaced string identifier 15 acquired in the operation information read-in step S2 exists in the "output statement". When the to-be-replaced string identifier 15 exists, a character-string enclosed by the identifier is replaced in sub-step S8a with definition data 22 corresponding to a definition item matching the character-string, or with the user-defined value 19 in the operation information 20, depending on the character-string. For example, when the to-be-replaced string identifier 15 is "[]", and [address] and [name] are written in an output statement in the template file 7, they are replaced with definition data 22 corresponding to definition items 21 matching the [address] and [name] from among the definition items 21 stored in the internal variable area 10 (the definition data 22 being called to-replace data).

When a character-string enclosed by the identifier coincides with the to-be-replaced character-string of the user-defined value 19, it is replaced with the to-replace character-string specified in the user-defined value 19. When an "output statement" does not have the to-be-replaced string identifier 15, the content is stored, as it is, in the internal variable area 10 in sub-step S8b.

In a generation result output step S9, first in sub-step S9a, output statements on which the replacement has been performed using the combinations of to-replace data (a3, a1), (b3, b1), (c3, c1) and the character-string "ABC" set in the user-defined value 19 in the replacement step S8, and output statements without replacement stored in the internal variable area 10 are combined and output to the output file. In an example of FIG. 4, three columns a to c of the definition data 22 are to-replace data, so that the number of patterns stored in the output file 8 is three.

Until the processing of the contents of the template file is completed, the template file analysis step S7 through the generation result output step S9 are repeated via step S10.

Moreover, when a plurality of input data files 6 exist in the folder indicated by the data file folder path 11 (C¥AAA¥BBB) acquired in the data file list building step S3, the processes of the data file analysis step S5 through the template-file end determination step S10 are repeated the same number of times as the number of the data files via step 11.

Furthermore, when a plurality of template files 7 exist in the folder indicated by the template file folder path 12 (C¥AAA¥CCC) acquired in the template file list building step S4, the processes of the data file analysis step S5 through the all-data-files end determination step S11 are repeated the same number of times as the number of the template files via step 12.

Finally, the output file 8 and the log file 9 are closed in an end processing step S13.

As a result of the above processing, data that the user or the like needs is stored in the output file 8, and can be referenced as needed.

### <Example 1>

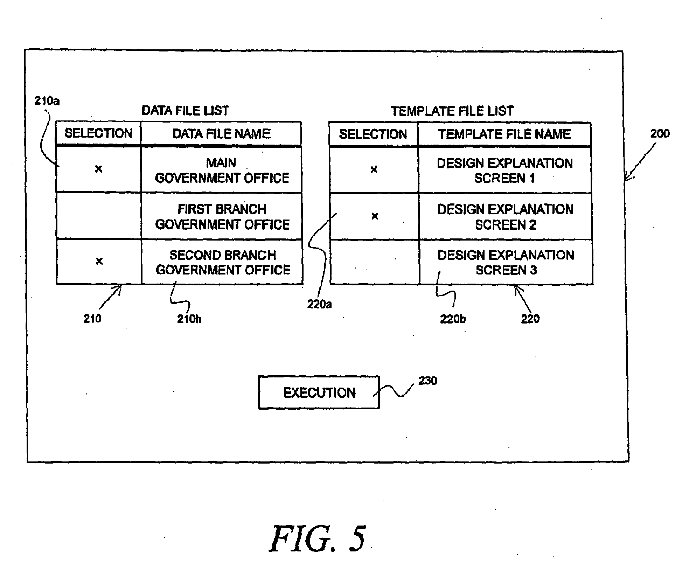

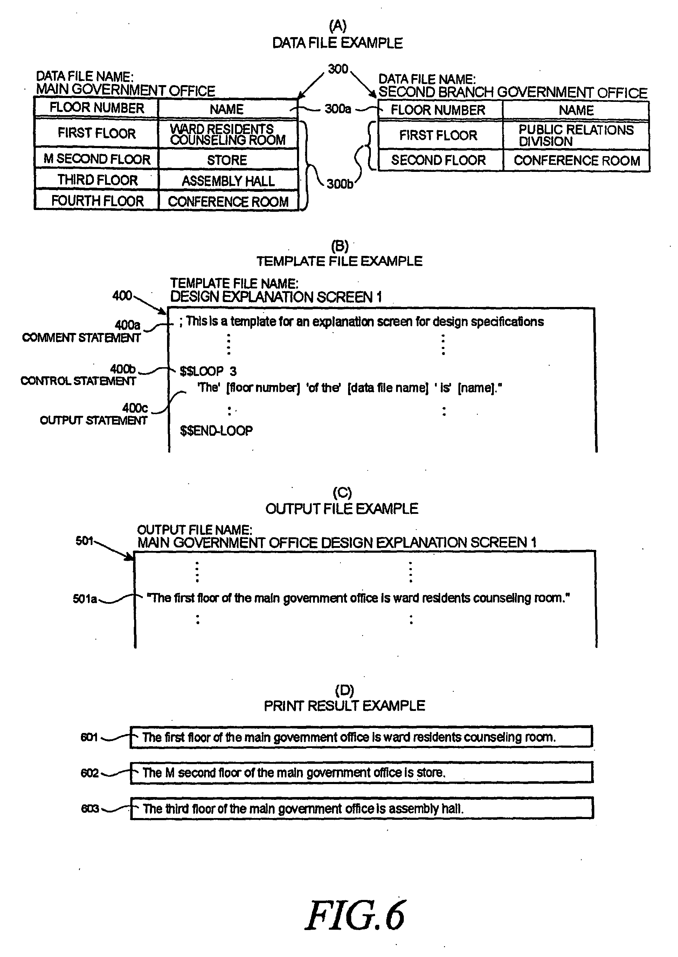

FIGS. 5 and 6 are views showing an example of the present invention that explains more specifically the processing flow explained in the above embodiment.

FIG. 5 shows an example of a file name select screen 200 when the generator program file 121 is executed, and is a screen for selecting files respectively from a data file list screen 210 displaying data file names acquired in the data file list building step S3 based on the data file folder path 11 acquired in the operation information read-in step S2, and a template file list screen 220 displaying template file names acquired in the template file list building step S4 based on the template file folder path 12 acquired in the operation information read-in step S2.

First, a data file to be used, that is, a data file that contains the character-string to replace to-be-replaced character-strings written in the template file 7 is selected from a data file name column 210b in the data file list screen 210. Here, data file names "main government office" and "second branch government office" having a cross marked in a data file select column 210a are selected. Furthermore, a file to be used is selected from a template file name column 220b in the template file list screen 220. Here, template file names "design explanation screen 1" and "design explanation screen 2" having a cross marked in a template file select column 220a are selected likewise.

After the selection of the data file names and the template file names, an execution button 230 is pressed to execute processing.

FIG. 6 shows specifically processing when executing the generator program file 121, with centering on the contents of the files. Note that it is assumed that the setting information of the parameter file 5 is the same as in FIG. 4.
(A) shows data-file-example contents 300 of the data files labeled as "main government office" and "second branch government office" selected from the data file name column 210b in the data file list screen 210 of FIG. 5 as data file examples. The data file labeled as "main government office" contains items "floor number" and "name" as data-file-example definition items 300a, and data-file-example definition data 300b corresponding to them. The data file labeled as "second branch government office" contains items "floor number" and "name" as data-file-example definition items 300a, and data-file-example definition data 300b corresponding to them likewise. Hereinafter, a description will be made taking as an example the data file labeled as "main government office".
(B) shows template-file-example contents 400 that is an excerpt of the template file labeled as "design explanation screen 1" selected from the template file name column 220b in the template file list screen 220 of FIG. 5 as a template file example.

The template file labeled as "design explanation screen 1" has a description made up of "comment statements", "control statements", and "output statements". The line head ";" of the first description line in the template-file-example contents 400 "; This is a template for an explanation screen for design specifications" is the identifier ";" designated in the comment statement identifier 18 of the parameter file 5, thereby indicating that this line is a comment statement 400a. Accordingly, the description "This is a template for an explanation screen for design specifications" following the ";" is handled as a comment, so that no processing is performed on this line, and processing proceeds to the next line.

The line head "$$" of the next written "$$LOOP" indicates that this line is a control statement 400b, because the control statement identifier 16 of the parameter file 5 = "$$". "LOOP" means an "iteration statement" according to the control statement names 17 of the parameter file 5. The lines present between this "LOOP" and "END-LOOP" are repeatedly executed a number of times specified behind "LOOP" (three times in this example).

The next line written as "'The' [floor number] 'of the' [data file name] 'is' [name]." determined to be an output statement 400c because the identifiers designated by the control statement identifier 16 and the comment statement identifier 18 set in the parameter file 5 are not contained in the line head. Then, because the to-be-replaced string identifier 15 of the parameter file 5 = "[]", a character-string enclosed in "[]" is a character-string to be replaced, and here, the enclosed character-strings "floor number", "data file name", and "name" of [floor number], [data file name], and [name] are to be replaced.

The to-be-replaced character-string "data file name" is replaced with the data file name "main government office" shown in the data file example (A). The to-be-replaced character-strings "floor number" and "name" are replaced with the data-file-example definition data 300b corresponding to the items "floor number" and "name" of the data-file-example definition items 300a of the data file labeled as "main government office", the data file example (A). For example, "floor number" is replaced with "first floor", and "name" is replaced with "ward residents counseling room". The character-strings enclosed by single quotations 'The', 'of the' and 'is' are output as they are. The above content of the output statement is output to and stored in the output file 8.

The output file example indicated by (C) shows output-file-example contents 501, an excerpt of an output file labeled as "main government office design explanation screen 1" to which the results of the above processing have been output.

An output-file-example content line 501a written as "The first floor of the main government office is ward residents counseling room." is obtained in the following manner. In the line written as "'The' [floor number] 'of the' [data file name] 'is' [name]." explained in the above template file example of (B), [data file name] is replaced with "main government office", and [floor number] and [name] are replaced respectively with data "first floor" and "ward residents counseling room" on the first line of the data-file-example definition data 300b corresponding to the items "floor number" and "name" of the data-file-example definition items 300a of the data file labeled as "main government office", and then enclosed single quotations 'The', 'of the' and 'is' are output to the output file as they are. In the same way as above, the lines between "LOOP" and "END-LOOP" written in the template-file-example contents 400 are repeatedly executed a number of times specified behind "LOOP" to be output to the output file.

A print result example of (D) shows the results of printing the contents output and stored in the output file as shown in the output file example (C). A print result example 1 (601), a print result example 2 (602), and a print result example 3 (603) are results of printing the contents stored in the output file obtained by having the character-strings enclosed in "[]" replaced with data on the first, second, and third lines of the data-file-example definition data 300b corresponding to the items "floor number" and "name" of the data-file-example definition items 300a of the data file labeled as "main government office".

The print result example 1 (601) is the result of printing the content obtained by having [floor number], [data file name], and [name] replaced with "first floor", "main government office", and "ward residents counseling room" respectively, in the line written as "'The' [floor number] 'of the' [data file name] 'is' [name]". The print result example 2 (602) is the result of printing the content obtained by having [floor number], [data file name], and [name] replaced with "M second floor", "main government office", and "store" respectively, likewise. The print result example 3 (603) is the result of printing the content obtained by having [floor number], [data file name], and [name] replaced with "third floor", "main government office", and "assembly hall" respectively, likewise. Here, the print result example 1 (601), the print result example 2 (602), and the print result example 3 (603) may be printed out, for example, on a sheet of paper or separate sheets of paper in terms of a print result format.

The same processing as explained above is performed on the data file labeled as "second branch government office" as well.

In the apparatus, method, program and record medium of the present invention, a generator portion consists essentially of a reading-in portion, a read-in data analyzing portion, and a generating portion. The generator portion performs processing using data in a data file, a template file, and a parameter file, and outputs the processing results to an output file and stores them. In the template file, contents to be output to the output file as they are, contents whose character-strings are to be replaced with data in the data file, and contents whose character-strings are to be replaced with information of the parameter file are written using output statements beforehand, and further, are written control statements including commands such as an "iteration statement" instructing to iterate between designated lines, a "conditional jump statement" specifying a condition to be evaluated and a destination to jump to if true, an "arithmetic statement" designating an arithmetic process, an "insertion statement" instructing to take in from the template file, and a "conversion statement" converting data of a designated item in the data file according to a designated conversion method prepared beforehand in the generator program file. The generator portion generates necessary data according to the contents of the read-in template file, and stores it in the output file. Thus, requirements for an output file can be handled by simple additions and alterations without restriction on the format of the data file, in other words, the data file can be a file in free-form format, thus enabling the reduction of time and cost.

## Claims

1. An automatic file generating apparatus which analyzes a data file and a template file as analysis targets and generates an output file by applying the data file to the template file, comprising:
a data file analysis portion;
a template file analysis portion; and
an output file generating portion,
wherein said data file analysis portion comprises:
means that reads in said data file line by line;
means that determines whether the read-in line contains a definition item or a definition datum; and
means that stores a determined definition item and a corresponding definition datum in such a way that they are related to each other,
wherein said template file analysis portion comprises:
means that reads in said template file line by line; and
means that determines whether the read-in line is an output statement, and when being an output statement, determines whether the output statement contains a character-string to be replaced, and when a to-be-replaced character-string is not contained, stores the output statement as it is, or when a to-be-replaced character-string is contained, stores the output statement after replacing the to-be-replaced character-string with one of said definition data corresponding to the definition item by referencing one of said definition items that coincides with the to-be-replaced character-string, and
wherein said output file generating portion comprises:
means that generates an output file from said output statements stored by said template file analysis portion.

2. The automatic file generating apparatus according to claim 1, wherein said template file analysis portion further comprises:
means that determines whether the read-in line is a control statement, and when being a control statement, executes processing designated by the control statement.

3. The automatic file generating apparatus according to claim 2, wherein said template file analysis portion further comprises:
means that determines whether the read-in line is a comment statement, and when being a comment statement, makes processing proceed to reading in a next line of said template file.

4. The automatic file generating apparatus according to claim 3, further comprising:
an operation information read-in portion that reads in beforehand, storage location information about a location where said data file and said template file as analysis targets are stored; identification information for discriminating between said output statements, said control statements, and said comment statements; and operation information including at least name information for said control statements.

5. The automatic file generating apparatus according to claim 4, further comprising:
means that builds a data file list made up of a plurality of data file names and a template file list made up of a plurality of template file names based on said storage location information;
means that selects the file names of a data file and a template file as analysis targets from said data file list and said template file list respectively.

6. The automatic file generating apparatus according to any of claims 1 through 5, further comprising:
means that stores a user defined item and a corresponding user defined value, which are not contained in said data file, beforehand in such a way that they are related to each other,
wherein said template file analysis portion further comprises:
means that determines whether said output statement contains a user defined item character-string, and when a user defined item character-string is contained, stores the output statement after replacing the user defined item character-string with one of said user defined values corresponding to the user defined item by referencing one of said user defined items that coincides with the user defined item character-string.

7. An automatic file generating method with which a computer analyzes a data file and a template file and generates an output file by applying the data file to the template file, comprising:
a data file analysis step;
a template file analysis step; and
an output file generating step,
wherein said data file analysis step comprises:
a process that reads in said data file line by line;
a process that determines whether the read-in line contains a definition item or a definition datum; and
a process that stores a determined definition item and a corresponding definition datum in such a way that they are related to each other,
wherein said template file analysis step comprises:
a process that reads in said template file line by line; and
a process that determines whether the read-in line is an output statement, and when being an output statement, determines whether the output statement contains a character-string to be replaced, and when a to-be-replaced character-string is not contained, stores the output statement as it is, or when a to-be-replaced character-string is contained, stores the output statement after replacing the to-be-replaced character-string with one of said definition data corresponding to the definition item by referencing one of said definition items that coincides with the to-be-replaced character-string, and
wherein said output file generating step comprises:
a process that generates an output file from said output statements stored by said template file analysis portion.

8. The automatic file generating method according to claim 7, wherein said template file analysis step further comprises:
a process that determines whether the read-in line is a control statement, and when being a control statement, executes processing designated by the control statement.

9. The automatic file generating method according to claim 8, wherein said template file analysis step further comprises:
a process that determines whether the read-in line is a comment statement, and when being a comment statement, makes processing proceed to reading in a next line of said template file.

10. The automatic file generating method according to claim 9, further comprising:
an operation information read-in step that reads in beforehand, storage location information about a location where said data file and said template file as analysis targets are stored; identification information for discriminating between said output statements, said control statements, and said comment statements; and operation information including at least name information for said control statements.

11. The automatic file generating method according to claim 10, further comprising:
a process that builds a data file list made up of a plurality of data file names and a template file list made up of a plurality of template file names based on said storage location information;
a process that selects the file names of a data file and a template file as analysis targets from said data file list and said template file list respectively.

12. The automatic file generating method according to any of claims 7 through 11, further comprising:
a process that stores a user defined item and a corresponding user defined value, which are not contained in said data file, beforehand in such a way that they are related to each other,
wherein said template file analysis step further comprises:
a process that determines whether said output statement contains a user defined item character-string, and when a user defined item character-string is contained, stores the output statement after replacing the user defined item character-string with one of said user defined values corresponding to the user defined item by referencing one of said user defined items that coincides with the user defined item character-string.

13. An automatic file generating program which implements a function of analyzing a data file and a template file and generating an output file by applying the data file to the template file by a computer, said program further implementing:
a data file analysis function;
a template file analysis function; and
an output file generating function,
wherein said data file analysis function includes:
a function of reading in said data file line by line;
a function of determining whether the read-in line contains a definition item or a definition datum; and
a function of storing a determined definition item and a corresponding definition datum in such a way that they are related to each other,
wherein said template file analysis function includes:
a function of reading in said template file line by line; and
a function of determining whether the read-in line is an output statement, and when being an output statement, determining whether the output statement contains a character-string to be replaced, and when a to-be-replaced character-string is not contained, storing the output statement as it is, or when a to-be-replaced character-string is contained, storing the output statement after replacing the to-be-replaced character-string with one of said definition data corresponding to the definition item by referencing one of said definition items that coincides with the to-be-replaced character-string, and
wherein said output file generating function includes:
a function of generating an output file from said output statements stored by said template file analysis portion.

14. The automatic file generating program according to claim 13, wherein said template file analysis function further includes:
a function of determining whether the read-in line is a control statement, and when being a control statement, executing processing designated by the control statement.

15. The automatic file generating program according to claim 14, wherein said template file analysis function further includes:
a function of determining whether the read-in line is a comment statement, and when being a comment statement, making processing proceed to reading in a next line of said template file.

16. The automatic file generating program according to claim 15, further implementing:
an operation information read-in function of reading in beforehand, storage location information about a location where said data file and said template file as analysis targets are stored; identification information for discriminating between said output statements, said control statements, and said comment statements; and operation information including at least name information for said control statements.

17. The automatic file generating program according to claim 16, further implementing:
a function of building a data file list made up of a plurality of data file names and a template file list made up of a plurality of template file names based on said storage location information;
a function of selecting the file names of a data file and a template file as analysis targets from said data file list and said template file list respectively.

18. The automatic file generating program according to any of claims 13 through 17, further implementing:
a function of storing a user defined item and a corresponding user defined value, which are not contained in said data file, beforehand in such a way that they are related to each other,
wherein said template file analysis function further includes:
a function of determining whether said output statement contains a user defined item character-string, and when a user defined item character-string is contained, storing the output statement after replacing the user defined item character-string with one of said user defined values corresponding to the user defined item by referencing one of said user defined items that coincides with the user defined item character-string.

19. A record medium which is computer-readable and on which an automatic file generating program that implements a function of analyzing a data file and a template file and generating an output file by applying the data file to the template file by a computer is recorded, said medium via the program further implementing:
a data file analysis function;
a template file analysis function; and
an output file generating function,
wherein said data file analysis function includes:
a function of reading in said data file line by line;
a function of determining whether the read-in line contains a definition item or a definition datum; and
a function of storing a determined definition item and a corresponding definition datum in such a way that they are related to each other,
wherein said template file analysis function includes:
a function of reading in said template file line by line; and
a function of determining whether the read-in line is an output statement, and when being an output statement, determining whether the output statement contains a character-string to be replaced, and when a to-be-replaced character-string is not contained, storing the output statement as it is, or when a to-be-replaced character-string is contained, storing the output statement after replacing the to-be-replaced character-string with one of said definition data corresponding to the definition item by referencing one of said definition items that coincides with the to-be-replaced character-string, and
wherein said output file generating function includes:
a function of generating an output file from said output statements stored by said template file analysis portion.

20. The record medium on which the automatic file generating program is recorded according to claim 19,
wherein said template file analysis function further includes:
a function of determining whether the read-in line is a control statement, and when being a control statement, executing processing designated by the control statement.

21. The record medium on which the automatic file generating program is recorded according to claim 20,
wherein said template file analysis function further includes:
a function of determining whether the read-in line is a comment statement, and when being a comment statement, making processing proceed to reading in a next line of said template file.

22. The record medium on which the automatic file generating program is recorded according to claim 21, via the program further implementing:
an operation information read-in function of reading in beforehand, storage location information about a location where said data file and said template file as analysis targets are stored; identification information for discriminating between said output statements, said control statements, and said comment statements; and operation information including at least name information for said control statements.

23. The record medium on which the automatic file generating program is recorded according to claim 22, via the program further implementing:
a function of building a data file list made up of a plurality of data file names and a template file list made up of a plurality of template file names based on said storage location information;
a function of selecting the file names of a data file and a template file as analysis targets from said data file list and said template file list respectively.

24. The record medium on which the automatic file generating program is recorded according to any of claims 19 through 23, via the program further implementing:
a function of storing a user defined item and a corresponding user defined value, which are not contained in said data file, beforehand in such a way that they are related to each other,
wherein said template file analysis function further includes:
a function of determining whether said output statement contains a user defined item character-string, and when a user defined item character-string is contained, storing the output statement after replacing the user defined item character-string with one of said user defined values corresponding to the user defined item by referencing one of said user defined items that coincides with the user defined item character-string.
